# FASCICULE DE BREVET EUROPEEN

(11) **EP 0 404 662 B1**
(45) Date de publication et mention de la délivrance du brevet: **05.01.1994**
(21) Numéro de dépôt: 90401724.1
(22) Date de dépôt: 19.06.1990
(51) Int. Cl.: B60J 1/20

(54) **Dispositif de maintien d'un store pare-soleil dans sa position d'occultation d'une baie**
Halterung eines Sonnenschutzrolles in seiner Abdeckungslage eines Fensters
Support for maintaining a roller-blind for a window in its closed position

(30) Priorité: 20.06.1989 FR 8908184
(43) Date de publication de la demande: 27.12.1990
(73) Titulaire: Etablissements FARNIER ET PENIN, F-79300 Bressuire (FR)
(72) Inventeur: Jeuffray, Jean-Marie, F-79300 Bressuire (FR); Ouvrard, Gaston, F-79300 Bressuire (FR)
(74) Mandataire: Robert, Jean-Pierre

(56) Documents cités:
- DE-A- 2 841 218
- FR-A- 1 381 059
- FR-A- 1 499 699

## Description

L'occultation de la vitre arrière d'un véhicule automobile est généralement réalisée par un store pare-soleil à enrouleur, que l'on déroule au travers d'une fente de la tablette arrière du véhicule sous laquelle est placé l'enrouleur.

Le store est une toile translucide équipée à son extrémité libre d'une barre de tirage qui comporte des moyens pour son accrochage à la partie du pavillon qui est voisine du bord supérieur de la lunette arrière.

En général cette barre de tirage est tubulaire rectiligne pour pouvoir être logée dans la fente de la tablette lorsque le store est enroulé, afin de n'être que peu ou pas en saillie sur la tablette.

Or la partie de pavillon à laquelle on accroche la barre de tirage est très souvent galbée. La barre de tirage accrochée est alors éloignée du bord supérieur de la lunette arrière, ce qui nuit à l'esthétique du véhicule. En outre, la qualité de l'accrochage est souvent médiocre du fait de cet écartement important.

Pour des véhicules de haut de gamme, on a formé la barre de tirage au contour de la partie arrière du pavillon à laquelle on l'accroche. Le principal inconvénient de cette disposition est que le store pare-soleil est dédié à un type de véhicule. Il est en outre mal commode de l'installer en seconde monte car la fente à réaliser dans la tablette arrière est incurvée.

Dans certains cas, lorsque la lunette est très large, on installe deux pare-soleils côte à côte, chacun d'eux ayant son bord libre équipé d'une barre de tirage en biais pour suivre grossièrement la moitié de la courbure du pavillon. L'occultation n'est pas parfaite, car on est contraint de laisser libre une zone étroite entre les deux stores pour être certain de leur bon fonctionnement (Voir par exemple DE-A-2 841 218).

On connaît par ailleurs par le document FR-A-1.381.059, une nappe de protection contre le givrage des pare-brise ou glaces de véhicules qui comporte un rideau associé à un enrouleur et à une baguette de tirage ayant pour fonction principale de fermer la fente d'extraction du rideau et pouvant comporter des moyens de fixation du rideau à la carrosserie.

La présente invention entend apporter une solution à ce problème jusqu'à aujourd'hui mal résolu de l'occultation esthétique de la lunette arrière d'un véhicule automobile qui se raccorde à un pavillon galbé.

A cet effet, elle a donc pour objet un dispositif de maintien d'un store pare-soleil en position d'occultation d'une baie, notamment de véhicule automobile, le store comportant une barre de tirage sensiblement flexible,
des moyens d'accrochage pour coopérer avec au moins deux organes correspondants fixes solidaires d'une structure galbée bordant la baie de telle sorte que cette coopération s'oppose à la tendance élastique de la barre de recouvrer sa rectitude (Dispositif du type divulgué par FR-A-1 381 059), le dispositif étant caractérisé en ce que les moyens d'accrochage sont solidaires de la barre de tirage et possèdent au moins deux surfaces de butée sensiblement perpendiculaires à la direction longitudinale de la barre pour coopérer avec des surfaces de butée des organes correspondants fixes solidaires de la structure galbée, ces surfaces de butée des organes fixes étant distantes l'une de l'autre d'une longueur mesurée le long du galbe de la structure égale à celle séparant les surfaces de butée de la barre de tirage lorsqu'elle a recouvré sa rectitude.

Par ces moyens, la barre au moment de son accrochage est contrainte en flexion pour faire coïncider les deux surfaces de butée susdite, cette contrainte la forçant à se galber et à épouser la courbure de la portion de pavillon comprise entre les deux butées fixes, et la coopération de ces butées s'opposant à la tendance élastique de la barre de recouvrer sa rectitude.

En outre, pour assurer une mise en place correcte du store et éviter la formation de plis inesthétiques, chaque moyen d'accrochage fixe comporte une surface d'appui de la barre de tirage sensiblement parallèle à l'axe médian du store dans sa position d'occultation de la baie.

Cette disposition évite d'avoir à "accoler" la barre de tirage au pavillon lui-même dont la courbure à cet endroit est peu compatible avec la surface du store, qui peut sans plis, affecter une allure un peu cylindrique à son extrémité équipée de la barre, mais qui ne pourrait pas sans plisser se raccorder au pavillon dont la surface est trop gauche et souvent d'une pente trop peu accentuée. (la pente du pare-soleil est en général supérieure à celle du pavillon et de la glace arrière du véhicule). En d'autres termes, chaque surface d'appui définit avec l'autre un dièdre largement ouvert dont l'arête est située dans le plan de symétrie longitudinal du store déroulé, cette arête plongeant vers le dérouleur. La barre de tirage est donc conformée en une portion de cylindre tangente à ce dièdre dont le bord libre ainsi courbé est sensiblement contenu dans la surface du pavillon à cet endroit. Le contact avec le pavillon peut être assez étroit même si les courbures de la barre de tirage et du pavillon sont différentes car la garniture intérieure du pavillon est à cet endroit relativement souple et absorbe ces différences par déformation.

Ainsi, on mettra en oeuvre de préférence deux couples de moyens d'accrochage situés au voisinage des extrémités longitudinales de la barre de tirage (dans ses derniers tiers), et en correspondance sur le pavillon, chaque couple de moyens d'accrochage correspondants comprenant une encoche et un téton susceptible d'être logé dans l'encoche, les surfaces de butée étant constituées par l'un des bords de l'encoche et par la surface latérale du téton.

De manière préférée, l'encoche est constituée par la partie étroite d'un orifice en trou de serrure tandis que le téton possède une tête élargie de diamètre supérieur à la largeur de cette partie étroite.

Enfin, on préférera mettre en place le téton sur la barre de tirage et l'orifice en trou de serrure sera ménagé dans un insert plan rapporté sur la structure bordant la baie et présentant autour de cet orifice la surface d'appui susdite.

D'autres caractéristiques et avantages apparaitront de la description donnée ci-après d'un mode de réalisation de l'invention.

Il sera fait référence aux dessins annexés dans lesquels :
- la figure 1 est une vue schématique en coupe d'un couple de moyens d'accrochage d'un store pare-soleil en position d'occultation d'une glace arrière de véhicule, ces moyens étant conformes à l'invention,
- la figure 2 est un schéma vu en bout montrant la mise en place de la barre de tirage sous un pavillon galbé,
- la figure 3 est une vue de détail suivant F de la figure 1.

La glace arrière d'un véhicule est référencée 1 sur les figures, sur lesquelles on a représenté une tablette arrière 2 au travers de laquelle un store pare-soleil 3 peut être déroulé du rouleau enrouleur 4 fixé de manière connue sous la tablette 2 dans la malle à bagages.

La garniture 5 du pavillon du véhicule comporte un insert 6 fixé à la tôle qui permet d'accrocher la barre de tirage 7 du store. Cette barre 7 est ici une lame flexible dans le sens de la flèche F, (perpendiculaire au plan du store 3) qui est solidaire, de manière connue, du bord libre du store 3.

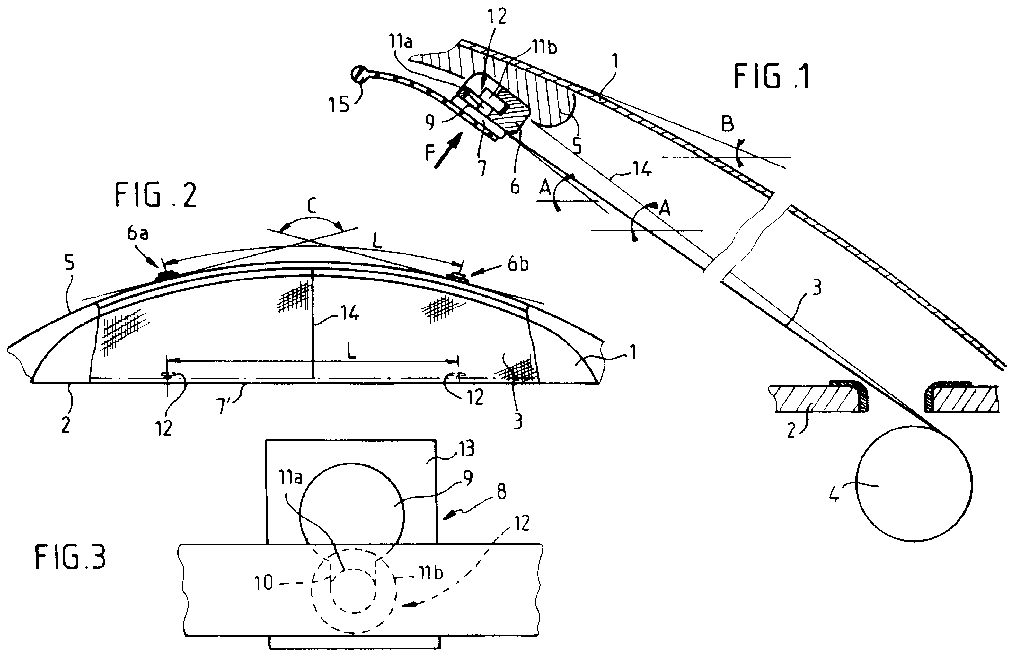

Plus précisément, le pavillon comporte deux inserts 6a, 6b qui se présentent chacun sous la forme d'une plaque 8 (voir figure 3)qui comporte un orifice 9 en trou de serrure. La partie étroite 10 de cet orifice reçoit le petit diamètre 11a d'un téton 12 à tête 11b solidaire de la barre de tirage 7 sur sa face tournée vers la glace 1 et le pavillon 5. L'orifice 9 en trou de serrure peut n'être qu'une simple encoche à bords parallèles ou à bords en V ouverte en partie supérieure pour accueillir le téton de manière que l'on puisse loger la tête 11b élargie de ce dernier derrière la plaque 8.

La surface 13 sur laquelle s'applique la barre 7 possède une inclinaison vers l'arrière sous un angle A qui est sensiblement égal à celui du store 3 lorsqu'il est accroché.

On a représenté par la ligne 14 sur les figures 1 et 2, l'axe médian du store 3 sur lequel l'angle A est mesuré. Il faut noter que la différence de pente du store au niveau de son axe médian et au niveau de l'un de ses bords est relativement faible. Elle est en tout cas plus faible que celle qui existe entre la pente moyenne du store et celle du pavillon (notée B sur la figure 1) et sur laquelle il ne faut pas aligner la barre de tirage 7 sous peine de créer des plis dans le store.

Chaque plaque 8 possède en outre une autre inclinaison notée sur la figure 2 par l'angle C, dans un plan transversal du véhicule. On comprend que le dièdre définit par les deux surfaces 13 possède une arête à l'aplomb de l'axe 14 du store et plongeant vers l'arrière. Si la distance L qui sépare chaque téton 12 le long de la barre 7 (représentée en 7' sur la figure 2 au niveau de la tablette 2) est égale, comme l'exige l'invention, à la distance L curviligne, mesurée le long du galbe du pavillon, qui sépare les deux trous de serrure 9, la barre 7 devra être cintrée pour faire coïncider les tétons et les orifices 9 et sera maintenue cintrée par les bords extérieurs de la partie étroite 10 de chaque orifice sur lesquels buteront les petits diamètres 11a de chaque téton 12.

La barre 7 épousera donc de manière satisfaisante la courbure du pavillon 5. Deux languettes 15 solidaires de la barre 7 aideront à sa manipulation et à son cintrage pour l'accrocher. Ces languettes 15 seront avantageusement situées au niveau de chaque téton pour aider à leur guidage dans les orifices 9.

Le principal avantage de ces moyens de fixation réside dans la possibilité de standardiser la production des pare-soleils de lunette arrière qui s'auto-adapteront de manière esthétique à chaque véhicule. L'équipement d'un véhicule, ultérieurement à sa fabrication, est également facilité .

## Revendications

1. Dispositif de maintien d'un store pare-soleil (3) en position d'occultation d'une baie (1), notamment de véhicule automobile, le store (3) comportant :
- une barre de tirage (7) sensiblement flexible,
- des moyens d'accrochage (12) pour coopérer avec au moins deux organes correspondants (6a, 6b) fixes solidaires d'une structure galbée (5) bordant la baie (1) de telle sorte que cette coopération s'oppose à la tendance élastique de la barre (7) de recouvrer sa rectitude,
le dispositif étant caractérisé en ce que les moyens d'accrochage (12) sont solidaires de la barre de tirage (7) et possèdent au moins deux surfaces de butée (11a) sensiblement perpendiculaires à la direction longitudinale de la barre (7) pour coopérer avec des surfaces de butée (10) des organes correspondants (6a, 6b) fixes solidaires de la structure galbée (5), ces surfaces de butée (10) des organes fixes (6a, 6b) étant distantes l'une de l'autre d'une longueur (L) mesurée le long du galbe de la structure (5) égale à celle (L) séparant les surfaces de butée (11a) de la barre de tirage (7) lorsqu'elle a recouvré sa rectitude.

2. Dispositif selon la revendication 1 caractérisé en ce que chaque moyen d'accrochage fixe (6a, 6b) comporte une surface d'appui (13) de la barre de tirage (7) sensiblement parallèle à l'axe médian (14) du store (3) dans sa position d'occultation de la baie (1).

3. Dispositif selon la revendication 1 ou la revendication 2 caractérisé en ce que chaque couple (6a,12 ; 6b,12) de moyens d'accrochage correspondants comprend une encoche (10) et un téton (12 ) susceptible d'être logé dans l'encoche (10), les surfaces de butée étant constituées par l'un des bords de l'encoche (10) et par la surface latérale du téton (12).

4. Dispositif selon la revendication 3 caractérisé en ce que l'encoche (10) est constituée par la partie étroite d'un orifice (9) en trou de serrure et que le téton (12) possède une tête élargie 11b) de diamètre supérieur à la largeur de cette partie étroite (10).

5. Dispositif selon la revendication 4 caractérisé en ce que le téton (12) est porté par la barre (7) de tirage tandis que l'orifice en trou de serrure (9) est ménagé dans un insert plan (8) rapporté sur la structure (5) bordant la baie (1) et présentant autour de cet orifice la surface (13) d'appui susdite.

## Patentansprüche

1. Vorrichtung zum Halten eines Sonnenrollos in der Verdunklungsposition an einem Fenster (1), insbesondere eines Kraftfahrzeugs, wobei das Rollo (3) einen im wesentlichen flexiblen Zugstab (7) und Verankerungsmittel (12) hat, die mit wenigstens zwei entsprechenden ortsfesten Organen (6a,6b), die mit einer das Fenster (1) umrandenden gewölbten Konstruktion (5) fest verbunden sind, derart zusammenwirken, daß dadurch dem elastischen Bestreben des Stabs (7), sich wieder gerade auszurichten, entgegengetreten wird, **dadurch gekennzeichnet**, daß die Verankerungsmittel (12) mit dem Zugstab (7) verbunden sind und wenigsten zwei zur Längsrichtung des Stabs (7) im wesentlichen senkrechte Anschlagflächen (11a) haben, um mit Anschlagflächen (10) der entsprechenden ortsfesten Organe (6a,6b), die mit der gewölbten Konstruktion (5) verbunden sind, zusammenzuwirken, wobei diese Anschlagflächen (10) der ortsfesten Organe (6a,6b) um eine längs der Wölbung der Konstruktion (5) gemessene Länge (L) voneinander bestandet sind, die gleich der Länge (L) ist, die die Anschlagflächen (11a) des Zugstabs (7) trennt, wenn dieser seine gerade Stellung wieder annimmt.

2. Vorrichtung nach Anspruch 1, **dadurch gekennzeichnet,** daß jedes ortsfeste Verankerungsmittel (6a,6b) eine Stützfläche (13) für den Zugstab (7) aufweist, die sich im wesentlichen parallel zur Mittelachse (14) des Rollos in dessen Verdunklungslage an dem Fenster (1) erstreckt.

3. Vorrichtung nach Anspruch 1 oder 2, **dadurch gekennzeich****net,** daß jedes Paar (6a,12;6b,12) der entsprechenden Verankerungsmittel eine Ausnehmung (10) und einen Zapfen (12) aufweist, der in der Ausnehmung (10) aufgenommen werden kann, wobei die Anschlagflächen gebildet sind durch einen der Ränder der Ausnehmung (10) und die Seitenfläche des Zapfens (12).

4. Vorrichtung nach Anspruch 3, **dadurch gekennzeichnet,** daß die Ausnehmung (10) gebildet ist durch den schmalen Bereich einer Schlüssellochöffnung (9) und daß der Zapfen (12) einen verbreiterten Kopf mit einem Durchmesser hat, der größer ist als die Breite dieses schmalen Bereichs (10).

5. Vorrichtung nach Anspruch 4, **dadurch gekennzeichnet,** daß der Zapfen (12) von dem Zugstab (7) getragen wird, während die Schlüssellochöffnung (9) in ein flaches Einsatzteil (8) eingearbeitet ist, das auf die Konstruktion (5) aufgeschraubt ist, welche das Fenster (1) umrandet und rund um diese Fensteröffnung die vorgenannte Stützfläche (13) aufweist.

## Claims

1. A device for holding a sun blind (3) in position to shade a window bay (1), in particular in a motor vehicle, the blind (3) comprising:
a pull bar (7) that is perceptibely flexible;
fastening means (12) for co-operating with at least two stationary corresponding members (6a, 6b) secured to a curved structure (5) bordering the window bay (1) in such a manner that this co-operation opposes the resilient tendency of the bar (7) to straighten out;
the apparatus being characterized in that the fastening means (12) are secured to the pull bar (7) and possess at least two abutment surfaces (11a) substantially perpendicular to the longitudinal direction of the bar (7) for co-operating with abutment surfaces (10) of the stationary corresponding members (6a, 6b) secured to the curved structure (5), said abutment surfaces (10) of the stationary members (6a, 6b) being spaced apart by a distance (L) along the curve of the structure (5) equal to the distance (L) between the abutment surfaces (11a) of the pull bar (7) once it has straightened out.

2. Apparatus according to claim 1, characterized in that each stationary fastening means (6a, 6b) includes a bearing surface (13) for the pull bar (7) substantially parallel to the middle axis (14) of the blind (3) in its position for shading the window bay (1).

3. Apparatus according to claim 1 or claim 2, characterized in that each pair (6a, 12; 6b, 12) of corresponding fastening means comprises a notch (10) and a stud (12) suitable for being received in the notch (10), the surfaces in abutment being constituted by one of the edges of the notch (10) and by the side surface of the stud (12).

4. Apparatus according to claim 3, characterized in that the notch (10) is constituted by the narrow portion of a keyhole-shaped orifice (9) and in that the stud (12) has an enlarged head (11b) of diameter that is greater than the width of said narrow portion (10).

5. Apparatus according to claim 4, characterized in that the stud (12) is carried by the pull bar (7) while the keyhole-shaped orifice (9) is formed in a plane insert (8) secured to the structure (5) bordering the window bay (1) and presenting the above-mentioned bearing surface (13) around said orifice.
